(19) Europäisches Patentamt European Patent Office Office européen des brevets

(11) **EP 3 015 537 B1**

(12) **EUROPEAN PATENT SPECIFICATION**

(45) Date of publication and mention of the grant of the patent:
**27.01.2021 Bulletin 2021/04**

(51) Int Cl.:
***C11B 1/06*** *(2006.01)*     ***A23D 9/02*** *(2006.01)*

(21) Application number: **15460068.8**

(22) Date of filing: **10.09.2015**

(54) **Method of obtaining oil from mirabelle plum**

VERFAHREN ZUZ HERTELLUNG VON MIRABELLEÖL

MÉTHODE POUR L'OBTENSION D'UNE HUILE DE MIRABELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2014 PL 40969514**

(43) Date of publication of application:
**04.05.2016 Bulletin 2016/18**

(73) Proprietor: **Politechnika Gdanska 80-233 Gdansk (PL)**

(72) Inventors:
- **Tynek, Maria 80-288 Gdansk (PL)**
- **Bartoszek-Paczkowska, Agnieszka 80-251 Gdansk (PL)**
- **Kusznierewicz, Barbara 80-254 Gdansk (PL)**
- **Lewandowska, Anna 80-283 Gdansk (PL)**
- **Sadowska, Sylwia 09-140 Raciaz (PL)**
- **Zielinski, Dariusz Barnaba 93-285 Lódz (PL)**
- **Nowak, Zbigniew 80-180 Gdansk (PL)**

(74) Representative: **Pawlowska, Justyna Gdansk University of Technology ul. G. Narutowicza 11/12 80-233 Gdansk (PL)**

(56) References cited:
CN-A- 102 732 376     CN-B- 103 254 991
CN-U- 203 457 732     FR-A1- 2 780 277
US-A- 1 826 987     US-A1- 2003 195 178

EP 3 015 537 B1

**Description**

This invention is a method of obtaining edible oil from mirabelle plum (*Prunus domestica* L.), in particular oil intended for use in the food industry, in salads, for frying, coffee roasting, coating dried fruit to prevent agglomeration, as well as in the cosmetic industry.

Oils are obtained from various raw materials using a variety of known methods, such as cold pressing, hot pressing, sometimes including an extrusion process, and solvent extraction. Oils extracted in the industry using hot processes and in the extrusion process as well as extraction oils must be subjected to refining, which can be partial or full, depending on the intended use of the oil. Seeds of various fruits are non-conventional fatty raw materials. The oil fraction is extracted from them usually by cold pressing, e.g. from seeds of roschip, apple, common perilla, pomegranate, melon, strawberry, less commonly by hot pressing, e.g. from apricot pits.

There are known method for obtaining oil from fruits pits, wherein pits are obtained from fresh or spoiled fruits, and are subject to pretreatment. Patent application CN102732376 discloses drying pretreatment method at normal temperature or elevated temperature and pretreatment drying using microwave. There are known method for obtaining pressed-oil from dried pits comprising cold crushing or cold pressing or screw pressing, what is disclosed in patent application CN203457732. The use of nitrogen during method for obtaining pressed-oil is also known from patent publication CN103254991.

From patent application FR2780277 there is known method for obtaining oil for cosmetic use by extraction using hexane.

According to the classic technology of deep hot pressing, the raw material is subjected to typical conditioning, i.e. exposure to a high temperature and humidity regulated by drying or humidifying within a temperature range between approximately 50°C and approximately 120°C, while the pressing temperature is over 100°C. Hot pressed oils must be subjected to refining processes.

Cold pressing is conducted with the use of mechanical procedures, without heat, and may be supplemented by purifying the oil only by treatment with water, filtration or sedimentation.

Currently, oils from seeds of various fruits are usually used in the cosmetic industry, for example pomegranate, apple, strawberry, purple plum, apricot seed oils, in view of their exceptional health benefits ensuring maintenance of the skin in good health. In general, oils from seeds of various fruits are not intended for culinary use.

The shallow frying and deep frying processes are conducted with the use of such oils and fats as palm oil, palm olein, high-oleic sunflower oil, high-oleic sunflower oil with an antioxidant extract of rice or oat bran, lard, suet, partially hydrogenated rapeseed oil and their mixtures. Studies are currently being conducted on new cultivars of oilseed crops yielding high-oleic oils. This is dictated by the required physicochemical properties of frying fats. The most restrictive requirements for frying fats as regards the composition of fatty acids are as follows: saturated fatty acids below 15%, C18:1 ($\omega$-9) > 75%, C18:2 ($\omega$-6) < 15%, C18:3 ($\omega$-3) < 1.5%, sum of trans isomers = zero.

Palm oil, commonly used for frying, which is solid at room temperature, has a melting point of about 39°C and contains over 40% of the undesirable C16:0 fatty acid and up to 2% of C14:0 fatty acid, which have been shown in the scientific literature to elevate cholesterol levels. Only refined, bleached and deodorised (RBD) oils are used for frying. It is not recommended to fry on "virgin" oils because they may contain metals, which are pro-oxidants, and pesticides. Animal fats, which are also used for frying, are solid at room temperature, have a high content of saturated acids, contain cholesterol and are characterised by low thermo-oxidative resistance. Since partially hydrogenated oils contain trans isomers, they should not be used in food.

Therefore, the selection of frying fats that would ensure proper health quality of the obtained food products is very limited. What is more, consumption of bad fats - saturated fats - and/or inadequate proportions of fatty acids are suggested as one of the causes of civilisation diseases, among which obesity and metabolic disorders, cardiovascular system diseases and cancers are mentioned in the scientific literature.

The generally recommended Mediterranean diet is rich in olive oil which contains ca. 70% of oleic acid. Oleic acid reduces LDL-cholesterol levels, which limits the formation of atherosclerotic plaques. It also contributes to reduced expression of the gene responsible for an aggressive form of breast cancer. Oleic acid reduces the risk of metabolic syndrome, thus reducing the risk of diabetes, heart diseases, stroke and obesity owing to decreased visceral fat deposition. Olive oil is also considered to support immune response associated with elimination of pathogenic fungi and bacteria.

For both technological and health reasons, new raw materials and new technologies are sought that would make it possible to obtain improved fats on the industrial scale in a cost-effective manner. One of such known approaches is the use of the extrusion process in the technology of extracting fats from oleaginous materials. This technology is one of the state-of-the art technologies that not only ensure an improvement of press efficiency - a high oil yield - but also make it possible to extract oils of the highest quality, with a low degree of oxidative transformation and low phosphorus content, and to obtain pressed cake of a high nutritional value. In extruders, in the extrusion process, material of the appropriate humidity is exposed, in a relatively short time, to a high temperature, mechanical forces and an increasing pressure. In the course of the process, the material changes its physical form from loose to plastic. In high-temperature extrusion, this mass expands after leaving the extruder. From the point of view of fat extraction technology, the most important change during the extrusion process is more effective opening of the cells that contain oil in comparison with such a classic preparation of the raw material as flaking and conditioning, which leads to a better pressing capacity. Oils obtained after extrusion is included in their extraction process have to be subsequently subjected to partial or full refining.

There exist methods of improving the known procedures of oil extraction, and they are currently used for scientific purposes; they include microwaving and roasting of the oleaginous material before pressing. However, the use of the microwave treatment technology in the production of oil on an industrial scale is not known. Seed roasting is used mainly in the processes of obtaining oil from pumpkin seeds and of obtaining culinary argan oil.

There is a known method of microwaving rapeseeds for a few minutes, described in a scientific publication (Yang M., Zheng G, Zhou Q., Liu C., Li W., Huang F. Influence of microwaves treatment of rapeseed on phenolic compounds and canolol content, J. Agric. food Chem., 62:1956-1963, 2014). This method leads to an increased yield of rapeseed pressing and a higher content of polyphenols in oil from microwaved seeds, and its higher antioxidant activity in comparison with the oil which is only cold pressed. There arc no known technological methods of using the microwaving process to extract oil, except for the use of the microwave energy for seed drying, which is described in patent application US4785726 A. According to this method, at 71°C water content is reduced by 0.5 to 1%.

There is also a known method described in the literature (Shrestha K., De Meulenaer B. Effect of seed roasting on canolol, tocopherol, and phospholipid contents, Maillard type reactions, and oxidative stability of mustard and rapeseed oils, J. Agric. Food Chem., 62: 5412-5419, 2014), where roasting rapeseed at 165°C precedes oil extraction. From roasted seeds, oil was extracted in laboratory conditions with petroleum ether. Compared to oil extracted from non-roasted seeds, this method leads to an increased content of phospholipids and tocopherols at different ratios, depending on the extraction time.

A method of oil extraction from heated sesame seeds is known from the description of Patent EP0771531 B1. The first stage of seed preparation is preheating at 80-120°C for 30 to 120 min to increase the antioxidant potential of the oil product before the press extracting or solvent-extracting process which should be conducted so as to maximise the concentration of lignans (phytoestrogens, isoflavonoids), which are desirable biologically active compounds, in the crude oil.

Mirabelle (*Prunus domestica* L.) fruits are very rarely used in food processing. They are used for producing jams, juices, syrups, and also as an additive to beauty masks and shampoos. The use of mirabelle fruits for obtaining oils for culinary purposes is unknown.

This invention includes a method of obtaining edible oil from mirabelle plum *Prunus domestica L.* characterised in that, the pits are dried in sunlight or in a flow of air at 20 to 35°C, preferably 25°C, until kernel humidity of up to 7% is obtained, preferably up to 5%. Subsequently, the dried pits are preferably subjected to crushing and flaking, after which they are pressed on a screw press while the temperature of the oil obtained should not exceed 40°C. The oil obtained is directed to a settling tank for 24 to 48 h under a nitrogen cushion. The oil obtained from the first pressing is filtered or centrifuged. The pressed cakes obtained from the first pressing are subjected to direct hexane extraction at 18 - 25°C in a known manner, and the oil obtained from extraction is preferably subjected to refining in a known manner.

Preferably, the oil obtained is washed with water. Preferably, before pressing dried pits are subject to crushing and flanking.

This invention also includes a method of obtaining edible oil from mirabelle plum *Prunus domestica L.* characterised in that, the pits are subjected to microwave treatment at 2200 - 2500 MHz, preferably 2450 MHz, for 1 to 15 minutes, preferably 3 to 6 minutes, obtaining pit temperature of 100 - 140°C, preferably 115 - 125°C, until humidity of 1.0 - 2.5% is obtained, preferably 1.45 - 3.00%. Then the pits are allowed to cool to room temperature, after which kernels are separated from the pits and preferably subjected to crushing and flaking. Then they are pressed on a screw press while the temperature of the oil obtained should not exceed 40°C, and the oil obtained is directed to a settling tank for 24 to 48 h under a nitrogen cushion, and the obtained first-pressed oil is filtered or centrifuged. The pressed cakes obtained from the first pressing are subjected to direct hexane extraction at 18 - 25°C in a known manner, and the oil obtained from extraction is preferably subjected to refining processes in a known manner.

Preferably, the oil obtained is washed with water. Preferably, before pressing dried pits are subject to crushing and flanking.

This invention also includes a method of obtaining edible oil from mirabelle plum *Prunus domestica* L. characterised in that, the pits are subjected to heating for 20 - 60 minutes, preferably 25 - 45 minutes, at 80°C, to a humidity of 6% - 3.5%, preferably to a humidity of 4%, and then the pits are allowed to cool to room temperature, after which the separated kernels are preferably subjected to flaking and then pressed on a screw press while the temperature of the oil obtained should not exceed 40°C. The oil obtained is directed to a settling tank for 24 to 48 h under a nitrogen cushion, after which the obtained first-pressed oil is filtered or centrifuged. The pressed cakes obtained from the first pressing are subjected to direct hexane extraction at 18 - 25°C in a known manner, and the oil obtained from solvent extraction is preferably subjected to refining in a known manner.

Preferably, the oil obtained is washed with water. Preferebly, before pressing dried pits are subject to crushing and flanking.

In view of the composition of fatty acids and a high content of tocopherols, oil extracted from mirabelle plum kernels may be considered a health-promoting oil with a high thermo-oxidative stability. The fat content in mirabelle plum pits is high: 34-50% calculated for dry mass. Moreover, it is a liquid oil with a very pleasant odour. Its high thermo-oxidative stability results from the high content of C18:1 fatty acid and the presence of tocopherols, especially a very high concentration of gamma-tocopherol representing about 75% of total tocopherols. In industrial practice, tocopherols are commonly added to frying fats. These compounds are potent antioxidants and are called vitamin E. Their high thermo-oxidative stability means that mirabelle oil exhibits high resistance to oxidation and polymerisation. Microwaving of pits changes the taste and odour of the extracted oil to nutty and increases oil stability. Moreover, the oil treated by microwaves and obtained according to the invention contains an increased amount of polyphenols and tocopherols.

Toxicity studies conducted in a model of eukaryotic cells did not reveal any hazards resulting from the presence of cyanogenic compounds in first pressed oils from mirabelle kernels extracted according to the presented invention, where the pits are or are not subjected to heating, boiling or microwaving before oil pressing. The chemical composition, the absence of any negative biological effects *in vitro* and resistance to the action of external factors, such as oxygen, high temperature, and light, of oils extracted from pits subjected or not to heating, boiling and microwaving make such oils suitable for use as frying fats, and also in salads, for coating dried fruit to prevent aggregation, and for coffee roasting. They can also be used for technical purposes, for example in the cosmetic industry.

The mirabelle plum *P. domestica* L. oil obtained according to the invention is characterised by a very good taste and a high content of biologically active compounds. Owing to the high content of oleic acid C18:1 and tocopherols, mirabelle kernel oil is suitable for culinary purposes, including for use in salads.

The invention is described in more detail in the embodiment examples, and the obtained oil parameters are presented in the study results and in the Figure presenting the curve of oil sample oxidation and determination of the induction period (IP).

Example 1

A) Preparation of the raw material for oil extraction

The raw material used for oil extraction is pits obtained from spoiled fruits whose pulp is not fit for use in the production of preserves. The spoiled pulp is removed with the use of a Karcher device by applying water under pressure. After pulp separation, the pits are scattered on a metal screen and dried at ambient temperature of 20°C in a flow of air for 8 hours, with periodic sifting.

From thus prepared pits, kernels were extracted, whose humidity was 4.39%.

B) Obtaining the first pressed oil

The shelled kernels were subjected to pressing on a screw press Hybren Oil Expeller Type H6, with a capacity of 5-6 kg/h. The uncrushed raw material was fed directly to the feeding hopper of the working press and the outflowing oil was obtained at a maximum temperature of 37°C. The oil was collected into a settling tank and kept for 28 h under a nitrogen cushion, after which the oil was centrifuged for 15 min at 4696 x G.

As a result of the above procedure, 192 g of oil calculated for dry mass with the following parameters was obtained from 1 kg of shelled pits:

- peroxide value - 0.04 mEq active oxygen/kg oil;
- acid value - 0.17 mg KOH/g oil;
- composition of the main fatty acids: C 16:0 -4.6%; C 18:0-1.4%; C 18:1 -72.7%; C 18:2 -20.0%; C18:3-0.11%;
- tocopherols content - 691 mg/kg oil;
- phosphorus content - 5.6 mg/kg oil.

No cyanogenic compounds were detected in the oil obtained (LOD <0.005 mg/mL calculated as amygdalin). The content of cyanogenic compounds in the oil isolated from mirabelle kernels was determined with the use of the HPLC-MS technique. The limit of detection (LOD) determined for amygdalin with the method used was 0.005 mg/mL.

As evidenced by toxicity studies conducted in a model of eukaryotic cells (cell line HT29 - human colorectal adenoma), the oil extracted according to the presented invention is not toxic to the test cells, which indicates that it is non-toxic to human cells.

Example 2

A) Preparation of the raw material for oil extraction

The raw material used for oil extraction is pits obtained from fresh fruit dried on a screen in sunlight for 7 days in a 6 cm layer and periodically sifted and screened to remove the dried pulp. The pits were stored for 2 years at room temperature.

From thus prepared pits, kernels were extracted, whose humidity was 5.65%. They constituted the raw material for extracting oil by cold pressing on Hybren H6, as in Example 1.

B) Obtaining the first pressed oil

The oil extraction process is conducted as in Example 1.

As a result of the above procedure, 190 g of oil calculated for dry mass with the following parameters was obtained from 1 kg of shelled pits:

- peroxide value - 0.78 mEq active oxygen/kg oil;
- acid value - 0.2 mg KOH/g oil;
- composition of the main fatty acids: C 16:0 -4.9%; C 18:0 -1.7%; C 18:1 -69.0%; C 18:2 -23.1%; C 18:3 -0.13%;
- tocopherols content - 787 mg/kg oil;
- phosphorus content - 5.8 mg/kg oil.

No cyanogenic compounds were detected in the oil obtained (LOD <0.005 mg/mL calculated as amygdalin). The content of cyanogenic compounds in the oil isolated from mirabelle kernels was determined with the use of the HPLC-MS technique. The limit of detection (LOD) determined for amygdalin with the method used was 0.005 mg/mL.

As evidenced by toxicity studies conducted in a model of eukaryotic cells (cell line HT29 - human colorectal adenoma), the oil extracted according to the presented invention is not toxic to the test cells, which indicates that it is non-toxic to human cells.

Example 3

The oil was obtained as described in Example 1, except that the raw material used for oil extraction were pits obtained from fresh fruit subjected to boiling at 100°C in water in a quantity of 10% of fruit weight for 35 min/l kg fruit. After the boiling process, the pits were separated from the mass on a screen. After pulp separation, the pits were scattered on a metal screen and dried at ambient temperature (ca. 20°C) in a flow of air for 8 hours, with periodic sifting. From thus prepared pits, kernels were extracted, whose humidity was 6.50%. They constituted the raw material for extracting oil by cold pressing on Hybren H6, as in Example 1.

As a result, 201 g of oil calculated for dry mass with the following parameters was obtained from 1 kg of shelled pits:

- peroxide value - 0.02 mEq active oxygen/kg oil;
- acid value - 0.10 mg KOH/g oil;
- composition of the main fatty acids: C 16:0 - 5.1 %; C 18:0 - 1.9%; C 18:1 -71.1%; C 18:2 - 20.8%; C18:3 - 0.13%;
- tocopherols content -740 mg/kg oil;
- phosphorus content -6.1 mg/kg oil.

No cyanogenic compounds were detected in the oil obtained (LOD <0.005 mg/mL calculated as amygdalin). The content of cyanogenic compounds in the oil isolated from mirabelle kernels was determined with the use of the HPLC-MS technique. The limit of detection (LOD) determined for amygdalin with the method used was 0.005 mg/mL.

As evidenced by toxicity studies conducted in a model of eukaryotic cells (cell line HT29 - human colorectal adenoma), the oil extracted according to the presented invention is not toxic to the test cells, which indicates that it is non-toxic to human cells.

Example 4

A) Preparation of the raw material for oil extraction

The raw material used for oil extraction was pits obtained from spoiled fruits whose pulp is not fit for use in the production of preserves. The spoiled pulp was removed with the use of a Karcher device by applying water under pressure. After pulp separation, the pits were scattered on a metal screen and dried at ambient temperature (20°C) in a flow of air for 8 hours, with periodic sifting. Then the pits were treated with microwaves. Fresh pits were microwaved at 2450 MHz for 6 min, and the pit temperature obtained after microwave treatment was 120°C. Then the pits were cooled down to room temperature. Kernels were separated from pits. The humidity of kernels was 1.49%. The kernels were crushed and subjected to flaking using the known method.

B) Obtaining the first pressed oil

Oil was pressed from the crushed raw material on a screw press Hybren Oil Expeller Type H6; the temperature of thus obtained oil did not exceed 45°C. The oil obtained was collected into a settling tank and kept for 48 h under a nitrogen cushion, after which the oil was centrifuged for 15 min at 4696 x G.

As a result of the above procedure, 215 g of oil calculated for dry mass with the following parameters was obtained from 1 kg of shelled pits:

- peroxide value - 0.08 mEq active oxygen/kg oil;
- acid value - 0.05 mg KOH/g oil;
- composition of the main fatty acids: C 16:0 - 4.7%; C 18:0 - 1.4%; C 18:1 - 71.3%; C 18:2-20.0%; C18:3 - 0.13%;
- tocopherols content - 700 mg/kg oil;
- phosphorus content - 52.8 mg/kg oil.

The content of polyphenols increased by 9% in comparison with the oil obtained in Example 1, which suggests an increase in health promoting value of the oil obtained. No cyanogenic compounds were detected in the oil obtained (LOD <0.005 mg/mL calculated as amygdalin). The content of cyanogenic compounds in the oil isolated from mirabelle kernels was determined with the use of the HPLC-MS technique. The limit of detection (LOD) determined for amygdalin with the method used was 0.005 mg/mL.

As evidenced by toxicity studies conducted in a model of eukaryotic cells (cell line HT29 - human colorectal adenoma), the oil extracted according to the presented invention is not toxic to the test cells, which indicates that it is non-toxic to human cells.

Example 5

A) Preparation of the raw material for oil extraction

Pits were obtained from mirabelle fruit as described in Example 1, except that after drying the pits were subjected to heating at 80°C for 30 min. The heating process decreased kernel humidity to 3.72%.

B) Obtaining the first pressed oil

Oil pressing was conducted as described in Example 4.

As a result of the above procedure, 210.5 g of oil calculated for dry mass with the following parameters was obtained from 1 kg of shelled pits:

- peroxide value - 0.05 mEq active oxygen/kg oil;
- acid value - 0.13 mg KOH/g oil;
- composition of the main fatty acids: C 16:0 - 4.7%; C 18:0 - 1.5%; C 18:1 - 71.7%; C 18:2 - 20.4%; C18:3 - 0.14%;
- tocopherols content - 650 mg/kg oil;
- phosphorus content - 5.83 mg/kg oil.

No cyanogenic compounds were detected in the oil obtained (LOD <0.005 mg/mL calculated as amygdalin). The content of cyanogenic compounds in the oil isolated from mirabelle kernels was determined with the use of the HPLC-MS technique.

The limit of detection (LOD) determined for amygdalin with the method used was 0.005 mg/mL.

As evidenced by toxicity studies conducted in a model of eukaryotic cells (cell line HT29 - human colorectal adenoma), the oil extracted according to the presented invention is not toxic to the test cells, which indicates that it is non-toxic to human cells.

Example 6

Obtaining oil by hexane extraction from pressed cake from the first pressing

The pressed cakes were crushed in a mortar.

a) The pressed cake obtained from the first pressing as described in Example 1 was subjected to direct solvent extraction with condensed hexane at 18°C.
The solvent extraction process was conducted in a Soxhlet extractor for 6 h at a flow rate of condensed hexane of 5 drops/min. The ratio of hexane to the sample was 20 parts of hexane : 1 part of pressed cake. After the solvent extraction, hexane was evaporated under vacuum on a rotary evaporator, and hexane residues were removed under nitrogen flow. The characteristics of the oil obtained are presented in Table 1.
b) The pressed cake obtained from the first pressing as described in Example 4 was subjected to direct hexane extraction. The solvent extraction process was conducted in a Soxhlet extractor for 6 h at a rate of 5 drops/min. The ratio of hexane to the sample was 20 parts of hexane : 1 part of pressed cake. After the solvent extraction, hexane was evaporated under vacuum on a rotary evaporator, and hexane residues were removed under nitrogen flow. The characteristics of the oil obtained are presented in Table 1.
c) The pressed cake obtained from the first pressing as described in Example 5 was subjected to direct hexane extraction. The solvent extraction process was conducted in a Soxhlet extractor for 6 h at a flow rate of condensed hexane of 5 drops/min. The ratio of hexane to the sample was 20 parts of hexane : 1 part of pressed cake. After the solvent extraction, hexane was evaporated under vacuum on a rotary evaporator, and hexane residues were removed under nitrogen flow.

The characteristics of the oil obtained are presented in Table 1.

Table 1. Characteristics of hexane-extracted oil from the pressed cake obtained from pressing kernels of fresh, microwaved or heated pits

| Oil from kernel cake | Oil content calculated for dry mass [%] | PV [Eq $O_2$/kg] | AV [mg KOH/g] | Content | | | C16:0 | C18:0 | C18:1 | C18:2 | C18:3 |
| | | | | P [mg/kg] | Tocopherols [mg/kg] | Cyanogenic compounds [mg/mL] | | | | | |
|---|---|---|---|---|---|---|---|---|---|---|---|
| From fresh kernels Example 6a | 26 | 0.069 | 0.17 | 50.4 | 686 | LOD (<0.005) | 4.8 | 1.4 | 72.0 | 19.8 | 0.14 |
| From microwaved kernels Example 6b | 23 | 0.109 | 0.14 | 207.8 | 703 | 0.16 | 4.9 | 1.4 | 73.1 | 17.3 | 0.10 |
| From heated kernels Example 6c | 22 | 0.089 | 0.15 | 49.8 | 675 | LOD (<0.005) | 4.8 | 1.4 | 71.9 | 19.7 | 0.14 |

The content of polyphenols in the oil obtained by solvent extraction from the pressed cake obtained from kernels microwaved before the first pressing (Example 6 b) was 5 times higher than in the oil obtained in Example 6a, which means that the oil had a higher health promoting value. As evidenced by toxicity studies conducted in a model of eukaryotic cells (cell line HT29 - human colorectal adenoma), the oil solvent extracted according to the presented invention (Examples 6a - 6c) is not toxic to the test cells, which indicates that it is non-toxic to human cells.

Example 7 (not according to the invention)

Direct solvent extraction of oil from mirabelle plum pits

A) Preparation of the raw material for oil extraction

The raw material used for oil extraction was pits obtained from spoiled fruits whose pulp is not fit for use in the production of preserves, prepared as in Example 1.

The pits were divided into 3 portions:

a) The first portion was fresh pits from which kernels were separated. Humidity of the kernels was 4.39%. They were subjected to crushing to a grain size below 0.5 mm;
b) The second portion were pits obtained from the fresh pits, which were then microwaved at 2450 MHz for 6 min and then subjected to kernel separation using the procedure described in Example 4; humidity of the kernels was 1.49% and the kernels were crushed to a grain size below 0.5 mm;
c) The third portion were kernels obtained from fresh pits, which were then heated at 80°C for 30 min and subjected to kernel separation using the procedure described in Example 5; humidity of the kernels was 3.72%, and the kernels were subsequently crushed to a grain size below 0.5 mm.

B) Obtaining the oil

The kernels obtained according to method a), b), c) were subjected to direct solvent extraction with liquid hexane at 20°C, to a fat content of 0.08%. After the solvent extraction, hexane was evaporated under vacuum on a rotary evaporator, and hexane residues were removed under nitrogen flow.

The characteristics of the oil obtained are presented in Table 2.

Table 2. Characteristics of the oil extracted from fresh, microwaved or heated kernels

| Oil from kernel cake | Oil content calculated for dry mass [%] | PV [Eq O$_2$kg] | AV [mg KOH/g] | Content | | | | | | | |
|---|---|---|---|---|---|---|---|---|---|---|---|
| | | | | P [mg/kg] | Tocopherols [mg/kg] | Cyanogenic compounds [mg/mL] | C16:0 | C18:0 | C18:1 | C18:2 | C18:3 |
| From fresh kernels - Example 7a | 46.82 ± 0.70 | 0.03 | 0.09 | 45.03 | 623 | 0.058 | 4.8 | 1.4 | 70.9 | 21.4 | 0.16 |
| From microwaved kernels - Example 7b | 50.5 ± 0.73 | 0.06 | 0.13 | 293.7 | 680 | 0.694 | 4.9 | 1.4 | 70.9 | 21.1 | 0.11 |
| From heated kernels - Example 7c | 49.9 ± 0.04 | 0.03 | 0.11 | 45.8 | 633 | 0.059 | 4.9 | 1.5 | 73.2 | 17.8 | 0.12 |

As evidenced by toxicity studies conducted in a model of eukaryotic cells (cell line HT29 - human colorectal adenoma), the oils extracted according to the manner presented in Examples 7a and 7c are not toxic to the test cells, which indicates that they are non-toxic to human cells. In the case of the oil extracted from microwaved kernels (Example 7b), the results of analytical tests indicate the presence of cyanogenic compounds (amigdalin, prunasin and a compound of an undetermined structure) constituting the source of HCN responsible for the cytotoxicity of this oil. Significant inhibition of growth was found in HT29 line cells (30% for 72-hour incubation), which means that the extracted oil contains substances with a potential to inhibit the growth of eukaryotic cells and therefore has to be subjected to elimination of these compounds before it can be used for culinary purposes.

Study of the thermo-oxidative stability profile of the oil obtained from mirabelle plum *Prunus domestica* L. pits

1. OSET test - a test of polymerisation ability of triacylglycerols exposed on oxygen and elevated temperature

Oils used as a frying medium must be characterised by high thermo-oxidative stability. Thermo-oxidative stability can be assessed with the use of the OSET test *(Oxidative Stability at Elevated Temperatures).* The principle of this method is heating the oil at 170°C with the addition of a specially prepared silica gel that accelerates polymerisation of triacylglycerols. The formed triacylglycerol polymers (TGP) including triacylglycerol dimers (PTG) arc assayed quantitatively by high-performance size exclusion chromatography (HPSEC). From these results, stability of the fat at an elevated temperature is assessed, with the use of the following formula:

$$OSET = \frac{100}{weight\,\%\,PTG}$$

The higher the OSET value, the lower the number of TAG polymers and dimers, and the greater thermal stability of the oil. This method is suitable for studying both RBD and crude vegetable oils.

Results:

The OSET test was performed for oils pressed from kernels from fresh mirabelle pits and from mirabelle pits subjected to microwaving or heating at the above-specified conditions. Only hexane-extracted oil, first pressed oils and oils solvent extracted from the pressed cake were subjected to the test. The results were compared with the results obtained for oils available on the market. As demonstrated by the test results, the oils obtained from kernels of raw pits, microwaved pits and heated pits from the first pressing (Examples 1 - 5) or from the cake after the first pressing (Examples 6a- 6c), and those only subjected to solvent extraction (Examples 7a - 7c), were characterised by similar OSET values. The test showed those oils to contain approximately 0.9% TGP each. After the test, the average of 2.9% TGP and 2.4% TGP remained in RBD and crude rapeseed oils available on the market, respectively. The OSET values determined for mirabelle pit oils were approximately 3 times higher than those determined for various RBD rapeseed oils available on the market. The OSET value for mirabelle pit oils were much higher than for "virgin" and "pomace" olive oils, which contained 3.2 to 9% TGP, depending on the manufacturer.

2. DSC test - testing oil resistance to heat and oxygen

Another method of determining oil stability at elevated temperatures, i.e. resistance to heat and oxygen, is differential scanning calorimetry (DSC). Fat oxidation is an exothermic process, and therefore the method involves registration of all heat effects taking place in the tested sample as a result of binding oxygen to double bonds in fatty acids, in the form of a kinetic curve. In the studies referred to here, the following analysis conditions are used: the tested sample is maintained at a stable temperature of 150°C and in an air flow of 100 mL/min, and thermal changes occurring in the sample are registered by a recorder. As a result, a recording in the form of a kinetic curve is obtained. The length of the induction period (IP) that reflects stability of the oil is calculated from the curve. The induction period (IP) is a period in which no thermal changes are observed (horizontal straight line), which are induced as a result of binding oxygen present in the flowing air. If oxygen is bound, the observed line transitions into an ascending line, which is presented in the figure.

Summary of the results obtained for oils from mirabelle kernels:

- The induction period of the oil obtained at 40°C in Example 4 from mirabelle kernels subjected to microwave treatment at 2450 MHz for 6 min is about 9% longer (62 min) than that of the oil obtained in Example 1 from fresh mirabelle kernels (57 min) or in Example 5 (58 min) from pits heated for 30 min at 80°C.

- The induction periods measured for the oils obtained from the pressed cake (Examples 6a, 6b, 6c) by hexane extraction are on average shorter by approximately 10% than the induction periods measured for the corresponding oils obtained from the first pressing in Examples 1, 4, 5.

- The induction period measured for the oil obtained (in Example 7b) by hexane extraction from mirabelle kernels subjected to microwave treatment (6 min, 2450 MHz) is 100% longer (76 min) than that of the oil obtained in Example 7a from fresh mirabelle pits (38 min).

- The induction period measured for the oil obtained in Example 7b by hexane extraction from mirabelle kernels subjected to heating (80°C, 30 min) is approximately 40% longer (54 min) than that of the oil obtained in Example 7a from fresh mirabelle pit kernels (38 min).

- The induction periods measured for solvent extracted oils and first-pressed oils extracted from mirabelle kernels that were fresh, microwaved and heated, and for solvent extracted oils obtained from pressed cake, are at least 100% longer in comparison with the induction periods measured for the randomly selected RBD and crude rapeseed oils and "virgin" and "pomace" olive oils available on the market.

- The induction period measured for the oil obtained in Example 7b by hexane extraction from mirabelle kernels subjected to heating (80°C, 30 min) is approximately 40% longer (54 min) than that of the oil obtained in Example 7a from fresh mirabelle pit kernels (38 min).

- The induction periods measured for solvent extracted oils and first-pressed oils extracted from mirabelle kernels that were fresh, microwaved and heated, and for solvent extracted oils obtained from pressed cake, are at least 100% longer in comparison with the induction periods measured for the randomly selected RBD and crude rapeseed oils and "virgin" and "pomace" olive oils available on the market.

**Claims**

1. A method of obtaining editable oil from mirabelle plum whereby in the first place pits are obtained from fresh or spoiled fruit and/or from fruit obtained from other food production processes, and are then subjected to pretreatment by drying or by microwaving, and then kernels are separated from the pits, after which first-pressed oil is obtained from the separated kernels by cold pressing, and the pressed cake is preferably subjected to further treatment, **characterised in that**, (i) the pits are dried in sunlight or in a flow of air at 20 to 35°C, until kernel humidity of up to 7% is obtained, or (ii) the pits are subjected to microwave treatment at 2200 - 2500 MHz for 1 to 15 minutes obtaining pit temperature of 100 - 140°C until humidity of 1.0-2.5% is obtained, after which the pits are cooled down to room temperature,
or (iii) pits are subjected to heating for 20 - 60 minutes at 80°C to a humidity of 6% - 3.5%, after which the pits are cooled down to room temperature,
and then pressing on a screw press is conducted while the temperature of the oil obtained should not exceed 40°C, and the oil obtained is directed to a settling tank for 24 to 48 h under a nitrogen cushion, after which the obtained first-pressed oil is filtered or centrifuged, wherein the pressed cake obtained from the first pressing is subjected to direct hexane extraction at 18 - 25°C in a known manner, and the oil obtained from solvent extraction is preferably subjected to refining in a known manner.

2. Method according to the claim 1, wherein the oil obtained is washed with water.

3. Method according to the claim 1, wherein when the pits are subjected to microwave treatment, it is at 2450 MHz for 3 to 6 minutes, obtaining pit temperature of 115 - 125°C, until humidity of 1.45 - 3.00%.

4. Method according to the claim 1, wherein before pressing dried pits are subject to crushing and flaking.

**Patentansprüche**

1. Methode zur Erlangung von Speiseöl aus einer Mirabellenpflaume bei der die Kerne zunächst aus frischen oder verdorbenen Früchten und/oder aus Früchten gewonnen werden, die aus anderen Produktionsprozessen gewonnen wurden, und dann durch Trocknen oder Mikrowellen vorbehandelt werden, und die Kerne dann von der Schale getrennt werden, wonach aus den abgetrennten Kernen durch Kaltpressung natives Öl gewonnen wird, und die Trester einer vorteilhaften weiteren Behandlung unterzogen werden, die durch folgendes gekennzeichnet ist, (i) die Samen werden in der Sonne oder in einem Luftstrom bei 20 bis 35°C getrocknet, bis die Kernfeuchtigkeit bis zu 7% beträgt, oder (ii)
die Samen werden 1-15 Minuten lang einer Mikrowelleneinwirkung bei 2200 - 2500 MHz ausgesetzt, wobei die Temperatur der Samen von 100 - 140°C erreicht, bis eine Feuchtigkeit von 1 - 2,5% erzielt wird, wonach die Samen auf Raumtemperatur abgekühlt werden,
oder (iii) die Samen werden 20 - 60 Minuten auf 80°C erhitz, um die Feuchtigkeit 6% - 3,5% zu erreichen, dann werden die Samen auf Raumtemperatur abgekühlt,
danach erfolgt das Pressen auf einer Schneckenpresse, wobei
die Temperatur des gewonnenen Öls 40°C nicht überschreiten sollte, und das gewonnene Öl wird 24 bis 48 Stunden lang zu einen Absetzbecken unter Stickstoffpolster geleitet, wonach das aus der ersten Pressung gewonnene Öl gefiltert und zentrifugiert wird, während der aus die ersten Pressung gewonnene Trester direkt mit Hexan bei 18 - 25°C in bekannter Weise extrahiert werden und das nach der Extraktion gewonnene Öl in bekannter Weise vorteilhaft raffiniert wird.

2.  Eine Methode gemäß Vorbehalt 1, bei der das gewonnene Öl mit Wasser gewaschen wird.

3.  Eine Methode gemäß Vorbehalt 1, bei der wenn
    die Samen einer Mikrowelleneinwirkung, hier sind
    das 2450 MHz für 3 bis 6 Minuten ausgesetzt werden, die Temperatur der Samen 115 - 125°C erreicht, bis zu einer Feuchtigkeit von 1,45 - 3,00%.

4.  Eine Methode gemäß Vorbehalt 1, bei der die getrockneten Samen vor dem Pressen zerbröckelt und abgeblättert werden.


## Revendications

1.  La méthode d'obtention d'huile comestible de mirabelle où d'abord les noyaux sont obtenus de fruits frais ou avariés et/ou de fruits obtenus d'autres processus de production alimentaire, puis soumis à un prétraitement par séchage ou au micro-ondes, puis les grains sont séparés des noyaux, après quoi l'huile de première pression est obtenue à partir des grains séparés par pression à froid, et le tourteau pressé est de préférence soumis à un traitement supplémentaire, **caractérisé en ce que**, (i)
    les noyaux sont séchées à la lumière du soleil ou dans un courant d'air à une température de 20 à 35°C, jusqu'à ce qu'une humidité du grain atteignant 7% soit obtenue, ou (ii)
    les noyaux sont soumis à un traitement aux micro-ondes à 2200 - 2500 MHz pendant 1 à 15 minutes obtenant une température de puits de 100 - 140°C jusqu'à obtention d'une humidité de 1,0 - 2,5%, après quoi les puits sont refroidis à température ambiante,
    ou (iii) les noyaux sont soumis à un chauffage pendant 20 - 60 minutes à 80°C jusqu'à une humidité de 6% - 3,5%, après quoi les puits sont refroidis à température ambiante,
    puis une pression sur une presse à vis est
    effectuée alors que la température de l'huile obtenue ne doit pas dépasser 40°C, et l'huile obtenue est dirigée vers un décanteur pendant 24 à 48 h sous coussin d'azote, après quoi l'huile de première pression obtenue est filtré ou centrifugé, dans lequel le tourteau pressé obtenu à partir du premier pressage est soumis à une extraction directe à l'hexane à 18 - 25°C d'une manière connue, et l'huile obtenue par extraction au solvant est de préférence soumise à un raffinage d'une manière connue.

2.  La méthode conforme à la revendication de brevet 1, dans laquelle l'huile est lavée à l'eau.

3.  La méthode conforme à la revendication de brevet 1, dans laquelle les noyaux sont soumis à un traitement par micro-ondes, il est de 2450 MHz pendant 3 à 6 minutes, en arrivant à la température des noyaux 115 - 125°C, jusqu'à une humidité de 1,45 à 3,00%.

4.  La méthode conforme à la revendication de brevet 1, dans laquelle avant le pressage, les noyaux secs sont écrasés et floconnés.

## REFERENCES CITED IN THE DESCRIPTION

**Patent documents cited in the description**

- CN 102732376
- CN 203457732
- CN 103254991

- FR 2780277
- US 4785726 A
- EP 0771531 B1

**Non-patent literature cited in the description**

- **YANG M. ; ZHENG G ; ZHOU Q. ; LIU C. ; LI W. ; HUANG F.** Influence of microwaves treatment of rapeseed on phenolic compounds and canolol content. *J. Agric. food Chem.,* 2014, vol. 62, 1956-1963

- **SHRESTHA K.** De Meulenaer B. Effect of seed roasting on canolol, tocopherol, and phospholipid contents, Maillard type reactions, and oxidative stability of mustard and rapeseed oils. *J. Agric. Food Chem.,* 2014, vol. 62, 5412-5419